# EUROPEAN PATENT APPLICATION

(11) **EP 3 589 036 A1**
(43) Date of publication of application: **01.01.2020**
(21) Application number: 18771767.3
(22) Date of filing: 22.03.2018
(51) Int. Cl.: H04W 56/00

(54) **DOWNLINK SYNCHRONIZATION SIGNAL TRANSMITTING METHOD AND RECEIVING METHOD AND DEVICE**

(30) Priority: 23.03.2017 CN 201710179375
(71) Applicant: Huawei Technologies Co., Ltd., Longgang District Shenzhen, Guangdong 518129 (CN)
(72) Inventor: HUANG, Lei, Shenzhen Guangdong 518129 (CN); LIN, Yingpei, Shenzhen Guangdong 518129 (CN); WU, Ji, Shenzhen Guangdong 518129 (CN)
(74) Representative: Epping - Hermann - Fischer
(86) International application number: PCT/CN2018/080062
(87) International publication number: WO 2018/171681

(57) **Abstract**

This application discloses a downlink synchronization signal sending method. The method includes: generating, by a base station, notification information including a status indication indicating a sending status of a downlink synchronization signal on an unlicensed frequency band, where the sending status indicates whether the downlink synchronization signal is successfully sent or fails to be sent; and sending, by the base station, the notification information by using a licensed frequency band. The downlink synchronization signal is sent with assistance of the licensed frequency band, to improve efficiency of sending the downlink synchronization signal on the unlicensed frequency band.

## Description

This application claims priority to Chinese Patent Application No. 201710179375.2, filed with the Chinese Patent Office on March 23, 2017 and entitled "DOWNLINK SYNCHRONIZATION SIGNAL SENDING METHOD AND RECEIVING METHOD AND DEVICE", which is incorporated herein by reference in its entirety.

### TECHNICAL FIELD

This application relates to communications technologies, and in particular, to a downlink synchronization signal sending method and a device.

### BACKGROUND

As requirements for a data transmission rate, communication quality, and the like of mobile communication are becoming higher, an existing frequency band used for mobile communication has become excessively congested. However, on a high frequency band (for example, 6 GHz to 300 GHz), a large quantity of spectrum resources are still not allocated or used. Therefore, introducing the high frequency band into cellular access communication to use a high bandwidth resource of the high frequency band is one of important research interests of a 5G (5-Generation) mobile communications technology.

There are abundant bandwidth resources on the high frequency band. Some bandwidth resources belong to licensed frequency bands, and can be used only after being licensed through payment. Some other bandwidth resources belong to unlicensed frequency bands, and can be used without being licensed. To better use unlicensed frequency bands, regulations have been correspondingly promulgated in each country or region to ensure fairness and performance of the unlicensed frequency bands. For example, a listen-before-talk (listen before talk, LBT) mechanism requires that any device that is to use an unlicensed frequency band needs to first detect the unlicensed frequency band to determine whether the unlicensed frequency band has been occupied. If the unlicensed frequency band is unoccupied, the device may occupy the unlicensed frequency band to transmit data. However, duration of using the occupied unlicensed frequency band is limited. When the duration of occupying reaches a preset value, the unlicensed frequency band occupied by the device is to be released. If data still needs to be transmitted, LBT needs to be performed again to preempt a resource. The LBT mechanism ensures fair use of a resource and is an extremely effective method for sharing the unlicensed frequency band.

In a 5G communications system, if the unlicensed frequency band is used for communication, the LBT mechanism also needs to be used. However, if the LBT mechanism is introduced, the LBT mechanism may affect a downlink synchronization design of the 5G communications system, for example, cause uncertainty of detection in a synchronization window, thereby affecting efficiency of accessing the 5G communications system by user equipment. Therefore, how to design a corresponding mechanism to eliminate impact of the LBT mechanism on the 5G communications system is an urgent problem to be resolved.

### SUMMARY

Embodiments of this application provide a downlink synchronization signal sending method, to provide a mechanism for improving efficiency of sending a downlink signal on an unlicensed frequency band.

According to one aspect, an embodiment of this application provides a downlink synchronization signal sending method. The method includes: generating, by a base station, notification information including a status indication indicating a sending status of a downlink synchronization signal on an unlicensed frequency band, where the sending status indicates whether the downlink synchronization signal is successfully sent or fails to be sent; and sending, by the base station, the notification information by using a licensed frequency band.

The notification information including the status indication indicating the sending status of the downlink synchronization signal on the unlicensed frequency band is sent on the licensed frequency band, so that the user equipment learns of whether the downlink synchronization signal on the unlicensed frequency band is successfully sent, thereby avoiding switching a current receive beam when the downlink synchronization signal is not received.

In a possible design, the base station listens on a channel before sending the downlink synchronization signal on the unlicensed frequency band. When the channel is idle, the base station sends the downlink synchronization signal on the unlicensed frequency band, and generates notification information including an ACK message. When the channel is idle, the downlink synchronization signal can be successfully sent, and the notification information including the ACK message is used to indicate, to the user equipment, that the downlink synchronization signal has been successfully sent.

When the channel is not idle, the base station fails to send the downlink synchronization signal on the unlicensed frequency band, and generates notification information including a NACK message. When the channel is not idle, the downlink synchronization signal fails to be sent, and the notification information including the NACK message is used to indicate, to the user equipment, that the downlink synchronization signal fails to be sent.

The notification information including the status indication indicating whether the downlink synchronization signal is successfully sent is sent on the licensed frequency band, to avoid missing the downlink synchronization signal by user equipment.

In another possible design, the base station has a plurality of transmit beams, the plurality of transmit beams are divided into a plurality of beam groups, and downlink synchronization signals are a plurality of synchronization signal bursts, each beam group has a beam group ID and is corresponding to one synchronization signal burst, and the notification information further includes the beam group ID.

In still another possible design, when the unlicensed frequency band includes a plurality of component carriers, the notification information further includes a component carrier ID, and the component carrier ID is used to indicate a component carrier corresponding to the sending status of the downlink synchronization signal.

In yet another possible design, when the synchronization signals are sent on the unlicensed frequency band by using a plurality of radio frequency channels, the notification information further includes a radio frequency channel ID, and the radio frequency channel ID is used to indicate a radio frequency channel corresponding to the sending status of the downlink synchronization signal.

According to another aspect, an embodiment of this application provides a sending device, where the sending device has a function of implementing behavior of the base station in the downlink synchronization signal sending method. The function may be implemented by hardware, or may be implemented by executing corresponding software by hardware. The hardware or software includes one or more modules corresponding to the foregoing function.

In a possible design, a structure of the sending device includes a processor and a transmitter, and the processor is configured to support the base station in performing corresponding functions in the foregoing downlink synchronization signal sending method. The transmitter is configured to support communication between the sending device and a receiving device, and send the notification information to the receiving device. The sending device may further include a memory. The memory is configured to couple to the processor, and the memory stores a program instruction and data that are necessary for the sending device.

According to still another aspect, an embodiment of this application provides a downlink synchronization signal receiving method. The method includes: detecting and receiving, by user equipment, notification information on a licensed frequency band, where the notification information includes a status indication indicating a sending status of a downlink synchronization signal from a base station on an unlicensed frequency band, and the user equipment has one or more receive beams; and determining, by the user equipment based on the notification information, whether to switch a current receive beam to receive the downlink synchronization signal on the unlicensed frequency band.

In a possible design, the determining, by the user equipment based on the notification information, whether to switch a current receive beam to receive the downlink synchronization signal on the unlicensed frequency band includes:
when the notification information includes an ACK message, switching, by the user equipment, the current receive beam to receive the downlink synchronization signal on the unlicensed frequency band.

In this way, the receive beam is switched only when the downlink synchronization signal has been successfully received by using the current receive beam, so that a next receive beam starts to be used to receive the downlink synchronization signal.

In another possible design, the determining, by the user equipment based on the notification information, whether to switch the receive beam includes:
when the notification information includes a NACK message, receiving, by the user equipment, the downlink synchronization signal on the unlicensed frequency band still by using the current receive beam.

In this way, when the downlink synchronization signal fails to be received by using the current receive beam, the receive beam is not switched, to avoid missing the downlink synchronization signal by the current receive beam.

According to yet another aspect, an embodiment of this application provides a receiving device, where the receiving device has a function of implementing behavior of the user equipment in the downlink synchronization signal sending method, and the receiving device has a plurality of receive beams. The function may be implemented by hardware, or may be implemented by executing corresponding software by hardware. The hardware or software includes one or more modules corresponding to the foregoing function.

In a possible design, a structure of the receiving device includes a receiver and a processor, where the receiver is configured to support communication between the receiving device and a sending device, and is configured to detect and receive the notification information on a licensed frequency band. The processor is configured to support the receiving device in executing a corresponding function of the user equipment in the downlink synchronization signal sending method. The receiving device may further include a memory. The memory is configured to couple to the processor, and the memory stores a program instruction and data that are necessary for the receiving device.

According to still yet another aspect of this application, a computer readable storage medium is provided. The computer readable storage medium stores an instruction. When the instruction runs on a computer, the computer performs the method in the foregoing aspects.

According to a further aspect of this application, a computer program product including an instruction is provided. When the computer program product runs on a computer, the computer performs the method in the foregoing aspects.

### BRIEF DESCRIPTION OF DRAWINGS

To describe the technical solutions in the embodiments of this application or in the prior art more clearly, the following briefly describes the accompanying drawings required for describing the embodiments or the prior art. Apparently, the accompanying drawings in the following description merely show some embodiments of this application, and a person of ordinary skill in the art can derive other implementations of this application from these accompanying drawings without creative efforts. However, all the embodiments or implementations fall within the protection scope of this application.
FIG. 1 is a schematic diagram of a possible application scenario according to an embodiment of this application;
FIG. 2 is a schematic diagram of a synchronization signal burst set according to an embodiment of this application;
FIG. 3 is a schematic flowchart of a downlink synchronization signal method according to an embodiment of this application;
FIG. 4 is a schematic diagram of a time window of a downlink synchronization signal according to an embodiment of this application;
FIG. 5 is a schematic diagram illustrating a time window based on a frame structure according to an embodiment of this application;
FIG. 6 is a schematic diagram of sending of notification information according to an embodiment of this application;
FIG. 7 is a schematic diagram of sending of notification information according to another embodiment of this application;
FIG. 8 is a schematic diagram of sending of notification information according to still another embodiment of this application;
FIG. 9 is a schematic diagram of sending of notification information according to still yet another embodiment of this application;
FIG. 10 is a schematic diagram of sending of notification information according to a further embodiment of this application;
FIG. 11 is a schematic diagram of sending of notification information according to a still further embodiment of this application;
FIG. 12 is a simplified schematic structural diagram of a sending device according to an embodiment of this application; and
FIG. 13 is a simplified schematic structural diagram of a receiving device according to an embodiment of this application.

### DESCRIPTION OF EMBODIMENTS

The following describes the technical solutions in the embodiments of this application with reference to the accompanying drawings in the embodiments of this application.

In this application, the word "example" is used to represent "used as an example, an illustration, or a description". Any "example" embodiment described in this application are not necessarily construed as being better or more advantageous than other embodiments. In order that any person skilled in the art can implement and use this application, the following description is provided. In the following description, details are set forth for the purpose of explanation. It should be understood by a person of ordinary skill in the art that this application can be implemented without these specific details. In other examples, well-known structures and processes are not described in detail to avoid obscuring the description of this application with unnecessary detail. Therefore, this application is not limited to the shown embodiments but extends to the widest scope that complies with the principles and characteristics disclosed in this application.

In the specification, claims, and accompanying drawings of this application, the terms "first", "second", "third", "fourth", and the like (if existent) are intended to distinguish between similar objects but do not necessarily indicate a specific order or sequence. It should be understood that the data termed in such a way is interchangeable in proper circumstances so that the embodiments of this application described herein can be implemented in other orders than the order illustrated or described herein. Moreover, the terms "include", "contain" and any other variants mean to cover the non-exclusive inclusion, for example, a process, method, system, product, or device that includes a list of steps or units is not necessarily limited to those expressly listed steps or units, but may include other steps or units not expressly listed or inherent to such a process, method, product, or device.

The terms "system" and "network" may be used interchangeably in this specification. The term "and/or" in this specification describes only an association relationship for describing associated objects and indicates that three relationships may exist. For example, A and/or B may indicate the following three cases: Only A exists, both A and B exist, and only B exists. In addition, the character "/" in this specification generally indicates an "or" relationship between the associated objects.

The embodiments of this application may be applied to a wireless communications system, and the wireless communications system includes but is not limited to: a narrowband internet of things (English: Narrow Band-Internet of Things, NB-IoT for short) system, a global system for mobile communications (English: Global System for Mobile Communications, GSM for short), enhanced data rates for GSM evolution (English: Enhanced Data rate for GSM Evolution, EDGE for short) system, a wideband code division multiple access (English: Wideband Code Division Multiple Access, WCDMA for short) system, a code division multiple access (English: Code Division Multiple Access, CDMA 2000 for short) 2000 system, a time division-synchronous code division multiple access (English: Time Division-Synchronization Code Division Multiple Access, TD-SCDMA for short) system, or a long term evolution (English: Long Term Evolution, LTE for short) system, and three major application scenarios eMBB, URLLC, and eMTC of a 5G mobile communications system.

A sending device mentioned in the embodiments of this application may be a base station, and the base station is an apparatus that is deployed in a radio access network and that is configured to provide a wireless communication function for user equipment. Base stations may include various forms of macro base stations, micro base stations (also referred to as small cells), relay stations, access points, and the like. A device with a base station function may have different names in systems that use different radio access technologies. For example, in an LTE system, the device is referred to as an evolved NodeB (evolved NodeB, eNB or eNodeB); and in a 3rd generation (English: 3rd Generation, 3G for short) system, the device is referred to as a NodeB (English: NodeB) or the like. For ease of description, in all the embodiments of this application, all the foregoing apparatuses that provide a wireless communication function for the user equipment are collectively referred to as a base station or a BS.

The user equipment (User Equipment, UE) in the embodiments of this application may include various terminals, handheld devices, in-vehicle devices, wearable devices, or computing devices that have a wireless communication function, or other processing devices connected to a wireless modem. An MS terminal may also be referred to as an terminal user equipment (English: terminal user equipment, UE). The MS terminal may alternatively include a subscriber unit (English: subscriber unit), a cellular phone (English: cellular phone), a smartphone (English: smartphone), a wireless data card, a personal digital assistant (English: Personal Digital Assistant, PDA for short) computer, a tablet computer, a wireless modem (English: modem), a handheld device (English: handset), a laptop computer (English: laptop computer), a machine type communication (English: Machine Type Communication, MTC for short) terminal, or the like. For ease of description, the devices mentioned above are collectively referred to as user equipment in all the embodiments of this application.

The following describes the technical solutions of this application in detail with reference to specific embodiments. The following several specific embodiments may be combined with each other, and a same or similar concept or process may not be described repeatedly in some embodiments.

First, several terms related to this specification are described.

A licensed frequency band (or referred to as an authorized frequency band) refers to a frequency domain resource that can be used only after being licensed by an administration department of the telecom industry.

An unlicensed frequency band (or referred to as a license-exempt frequency band) refers to a frequency domain resource that can be directly used without being licensed by the administration department of the telecom industry, for example, a 5 GHz frequency band, on a premise that a related technical requirement is met. An operator can implement offloading of a network capacity by transmitting information by using the unlicensed frequency band.

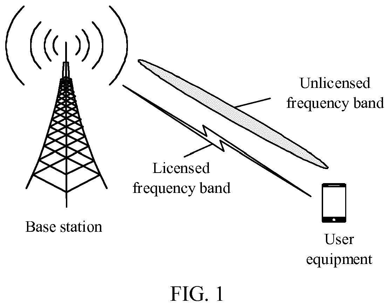

In a licensed assisted access (Licensed Assisted Access, LAA) scenario, as shown in FIG. 1, the base station may perform data communication with the user equipment by using both the licensed frequency band and the unlicensed frequency band. Specifically, the user equipment has accessed the wireless communications system by using the licensed frequency band, but the user equipment also performs data communication by using the unlicensed frequency band. Therefore, a downlink synchronization process of the unlicensed frequency band needs to be performed.

In a transmission design of a downlink synchronization signal in 5G new radio, a downlink synchronization signal is periodically sent, and a complete period is corresponding to a synchronization signal burst (Synchronization Signal Burst, SSB) set. Each synchronization signal burst set includes a plurality of synchronization signal bursts, each synchronization signal burst includes a plurality of synchronization signal blocks, and each synchronization signal block includes a primary synchronization signal (Primary synchronization signal, PSS) and a secondary synchronization signal (Secondary synchronization signal, SSS). When performing initial system synchronization, the user equipment periodically switches a receive beam to detect a downlink synchronization signal.

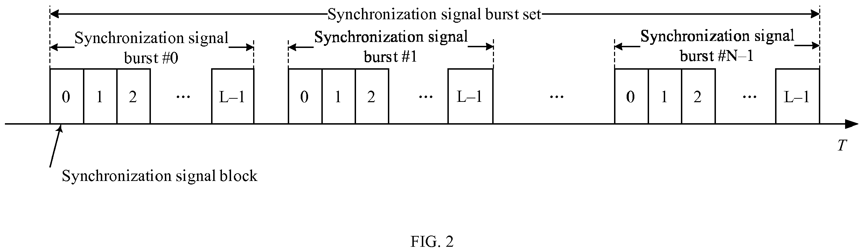

Referring to FIG. 2, for ease of description, an example in which the base station has L transmit beams and the user equipment has N receive beams is used for further description. FIG. 2 illustrates that a synchronization signal burst set includes N synchronization signal bursts. To be specific, a quantity of synchronization signal bursts included in one synchronization signal burst set is consistent with a quantity of receive beams of the user equipment, and each synchronization signal burst is corresponding to one receive beam of the user equipment. One synchronization signal burst includes L synchronization signal blocks, and each synchronization signal block is corresponding to one transmit beam of the base station. Therefore, when the base station completes sending of a synchronization signal burst, each transmit beam of the base station has been used to send synchronization signal blocks. When the user equipment completes receiving of a synchronization signal burst, one receive beam of the user equipment may be used to receive synchronization signals by using the L transmit beams of the base station. In this way, when the base station completes sending of one synchronization signal burst set, each receive beam of the user equipment may be used to receive a synchronization signal sent by using each transmit beam of the base station.

Optionally, in another implementation, a quantity of synchronization signal bursts included in the synchronization signal burst set may not be equal to a quantity of receive beams of the user equipment, thereby improving flexibility of setting of the synchronization signal burst.

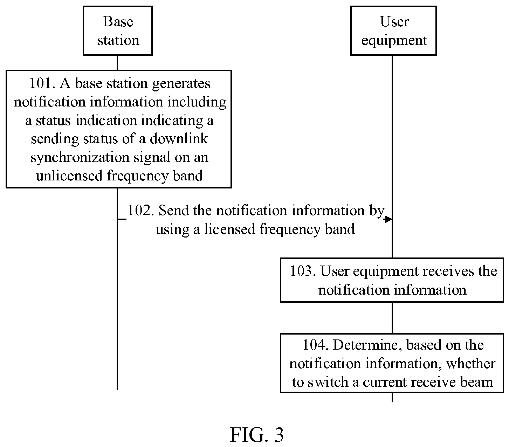

FIG. 3 is a flowchart of steps of a downlink synchronization signal sending method according to an embodiment of this application.

101. Abase station generates notification information including a status indication indicating a sending status of a downlink synchronization signal on an unlicensed frequency band, where the sending status indicates whether the downlink synchronization signal is successfully sent or fails to be sent.

102. The base station sends the notification information by using a licensed frequency band, where the notification information includes status indication information of the sending status of the downlink synchronization signal.

103. User equipment receives the notification information, so that the user equipment may determine, based on the notification information, whether the downlink synchronization signal of the base station is successfully sent.

104. The user equipment determines, based on the notification information, whether to switch a current receive beam, to receive the downlink synchronization signal on the unlicensed frequency band.

The notification information including the status indication indicating the sending status of the downlink synchronization signal on the unlicensed frequency band is sent on the licensed frequency band, so that the user equipment learns of whether the downlink synchronization signal on the unlicensed frequency band is successfully sent, thereby improving efficiency of downlink synchronization on the unlicensed frequency band.

Generally, the base station sends the downlink synchronization signal and the notification information in a predetermined time window, and correspondingly, the user equipment detects the downlink synchronization signal and the notification information in a corresponding time window. The predetermined time window may be periodic or triggered by a specific event. On the unlicensed frequency band, channel contention needs to be performed to send a signal. In other words, it is possible that a signal is successfully sent because a channel is successfully obtained after contention and a signal fails to be sent because a channel fails to be obtained after contention.

After sending the downlink synchronization signal, the base station may learn of whether the base station has successfully sent the downlink synchronization signal. In step 101, the base station generates the notification information including the status indication indicating a sending status of a downlink synchronization signal on the unlicensed frequency band.

For ease of description, the time window for sending the downlink synchronization signal by the base station is referred to as a "synchronization sending time window", and the time window for sending the notification information by the base station is referred to as a "notification sending time window". It may be understood that the synchronization sending time window may include or may not include a time used by the base station to perform channel listening on the unlicensed frequency band. In addition, a time window for detecting the downlink synchronization signal by the user equipment is referred to as a "synchronization detection time window", and a time window for detecting the notification information by the user equipment is referred to as a "notification detection time window".

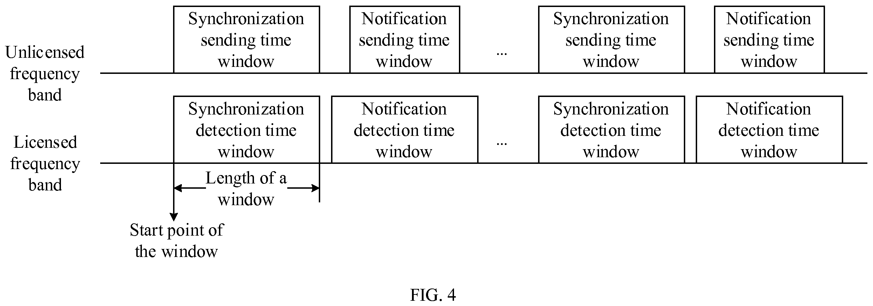

For example, referring to FIG. 4, a notification sending time window may be set to be following the synchronization sending time window, and the notification detection time window and the notification sending time window are set in a corresponding manner. A length of the notification detection time window is usually greater than or equal to that of the notification sending time window, thereby ensuring that the user equipment has a sufficient time to detect the notification information.

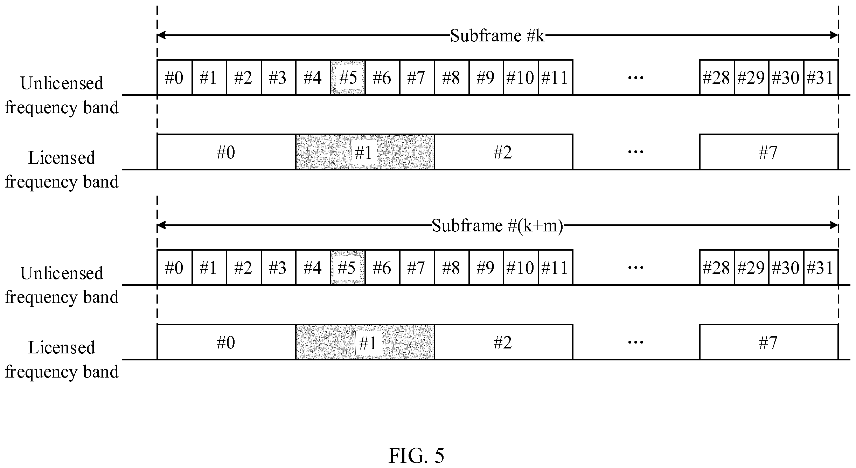

Different frame structures are usually used for the unlicensed frequency band and the licensed frequency band. The time window is described based on a frame structure below. For example, referring to FIG. 5, a subcarrier spacing of 60 kHz is used for the licensed frequency band, and a subframe (Subframe) of 1 ms includes eight slots (slot). A subcarrier spacing of 480 kHz is used for the unlicensed frequency band, and a subframe of 1 ms includes 32 slots. When a scheduling period is one slot, the user equipment may perform scheduling 8 times within one subframe of the licensed frequency band, and may perform scheduling 32 times within one subframe of the unlicensed frequency band.

That a first downlink synchronization signal burst is sent in a slot 5 of a k^{th} subframe on the unlicensed frequency band is used as an example, and the slot 5 of the k^{th} subframe is corresponding to a slot 1 of a k^{th} subframe on the licensed frequency band. When a second synchronization signal burst is sent in a slot 5 of a (k+m)^{th} subframe, the slot 5 of the (k+m)^{th} subframe is corresponding to a slot 1 of a (k+m)^{th} subframe of the licensed frequency band. Therefore, the notification information needs to be sent in slots between a slot 2 of the k^{th} subframe and a slot 0 of the (k+m)^{th} subframe of the unlicensed frequency band.

Optionally, a length of the notification detection time window may be five slots. For example, when a start location of the notification detection time window is a third slot of the k^{th} subframe on the licensed frequency band, the notification detection time window is a third slot to a seventh slot on the licensed frequency band.

A notification manner of the notification information is described below by using an example. Optionally, the notification information may be notified to the user equipment by using a physical downlink control channel (Physical Downlink Control Channel, PDCCH). For example, a synchronization signal radio network temporary identity (Synchronization Signal Radio Network Temporary Identity, SS-RNTI) and a downlink control information (Downlink Control Information, DCI) format are defined for the notification information. The SS-RNTI is used to mark the user equipment corresponding to the notification information, and the DCI is used to carry the notification information. The user equipment performs detection in the notification detection time window in common search space (Common Search Space, CSS) of the physical downlink control channel by using the RNTI. When the DCI corresponding to the SS-RNTI is detected, information in the DCI is read to obtain the notification information.

Optionally, the notification information may also be notified to the user equipment by using media access control (Media Access Control, MAC) signaling. Specifically, the MAC signaling includes the notification information. The user equipment performs detection in the CSS of the PDCCH by using the SS-RNTI in the notification detection time window. When the DCI corresponding to the SS-RNTI is detected, the information in the DCI is read. The information in the DCI includes resource allocation information of the MAC signaling, and the MAC signaling may be obtained by using the resource allocation information, to obtain the notification information.

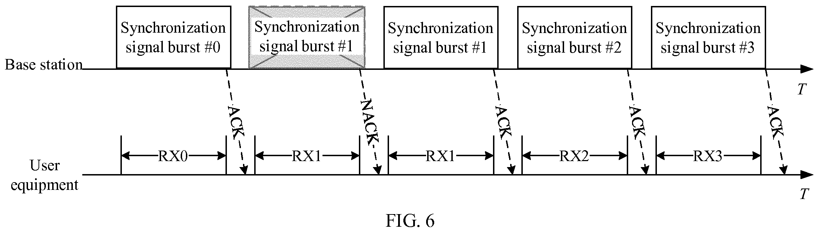

With reference to FIG. 6 to FIG. 10, the following describes different design manners of sending notification information by a base station.

On an unlicensed frequency band, the base station needs to first perform LBT, and send a synchronization signal burst when a channel is idle. Because a length of a sending period of a synchronization signal burst set may be greater than maximum occupation duration of the LBT, LBT may be performed a plurality of times in the sending period of the synchronization signal burst set.

### Embodiment 1

The base station sends downlink synchronization signal bursts on the unlicensed frequency band by using N synchronization sending time windows. In each synchronization sending time window, the base station first listens on a channel to determine whether the channel is idle. The base station may preempt the channel only when the channel is idle, and send the downlink synchronization signal burst.

Also referring to FIG. 6, an example in which the base station sends four synchronization signal bursts SSB #0, SSB #1, SSB #2, and SSB #3 by using four synchronization sending time windows is used for description. The four synchronization signal bursts SSB #0 (SSB #0), SSB #1 (SSB #1), SSB #2 (SSB #2), and SSB #3 (SSB #3) include signals of each transmit beam, and a difference between the four synchronization signal bursts is that the four synchronization signal bursts have different numbers. In a first synchronization sending time window, when the base station listens on the unlicensed frequency band, that the channel is idle, the base station preempts the channel, and sends the synchronization signal burst #0. In some embodiments, the synchronization signal burst #0 is successfully sent, and the base station generates notification information including an acknowledgement (acknowledgement, ACK) message, and sends the notification information in a notification sending time window by using a licensed frequency band. When the notification information includes only the ACK message, the notification information may alternatively be understood as the ACK message. User equipment detects a downlink synchronization signal on the unlicensed frequency band in a synchronization detection time window by using a receive beam RX0, and receives the downlink synchronization signal burst #0. After detecting the ACK message on the licensed frequency band in a notification detection time window, the user equipment switches to a receive beam RX1, and detects the downlink synchronization signal in a next synchronization detection time window by using the receive beam RX1.

In a second synchronization sending time window, when the base station listens on the unlicensed frequency band, that the channel is not idle, the base station fails to preempt the channel to send the synchronization signal burst #1. In this case, the synchronization signal burst #1 fails to be sent. The base station generates notification information including a negative acknowledgement (negative acknowledgement, NACK) message, and sends the notification information in the notification sending time window on the licensed frequency band. When the notification information includes only the NACK message, the notification information may alternatively be understood as the NACK message. The user equipment fails to detect the downlink synchronization signal on the unlicensed frequency band in the synchronization detection time window by using the receive beam RX1, but the user equipment detects, on the licensed frequency band in the notification detection time window, the notification information including the NACK message. Then, the user equipment does not switch the receive beam, and continues to detect the downlink synchronization signal in a next synchronization detection time window by using the current receive beam RX1.

In a third synchronization sending time window, when the base station listens on the unlicensed frequency band, that the channel is idle, the base station preempts the channel, and sends the downlink synchronization signal. Because the synchronization signal burst #1 had not been sent, the base station continues to send the synchronization signal burst #1 in the third synchronization sending time window, and the synchronization signal burst #1 is successfully sent. The base station generates notification information including an ACK message, and sends, on the licensed frequency band in the notification sending time window, the notification information including the ACK message. The user equipment receives the downlink synchronization signal on the unlicensed frequency band in the synchronization detection time window by using the receive beam RX1, and receives the synchronization signal burst #1; after the user equipment detects, on the licensed frequency band in the notification detection time window, the notification information including the ACK message, the user equipment switches to a receive beam RX2, and detects the downlink synchronization signal in a next synchronization detection time window by using the receive beam RX2.

In fourth and fifth synchronization sending time windows, the base station preempts the channel, and separately sends the downlink synchronization signal burst #2 and the downlink synchronization signal burst #3. A process is similar to that in the first synchronization sending time window. Details are not described herein again. Therefore, the base station completes sending traverse of transmit beams, and the user equipment completes receiving traverse of receive beams. The synchronization signal burst #0 to the synchronization signal burst #3 that include the synchronization signal of each transmit beam of the base station are successfully separately received by using the receive beams RX0 to RX3 of the user equipment, to complete synchronization with the base station.

### Embodiment 2

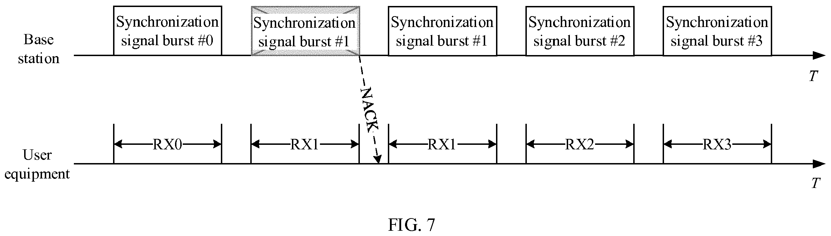

In this embodiment, the base station may send notification information in another design manner. Referring to FIG. 7, a difference between this embodiment and the embodiment shown in FIG. 6 is that the notification information indicates synchronization signal sending statuses in different manners. The following focuses on the difference between the two embodiments.

When the base station listens on the unlicensed frequency band in a specific synchronization sending time window, that the channel is idle, the base station successfully preempts the channel, and sends a synchronization signal burst, and the base station does not send the notification information, and continues to send a next synchronization signal burst. Correspondingly, user equipment receives the synchronization signal burst on the unlicensed frequency band in a synchronization detection time window, and fails to receive the notification information in a notification detection time window. Then, the user equipment switches to a next receive beam, to detect a downlink synchronization signal.

When the base station listens on the unlicensed frequency band in the specific synchronization time window, that the channel is not idle, the base station fails to send a downlink synchronization signal, and the base station generates notification information including a NACK message, sends the notification information to the user equipment on a licensed frequency band in the notification sending time window, and continues to send the current synchronization signal burst in a next time window. When the notification information includes only the NACK message, the notification information may alternatively be understood as the NACK message. Correspondingly, the user equipment fails to receive the synchronization signal burst on the unlicensed frequency band in the synchronization detection time window, and receives, on the licensed frequency band in the notification detection time window, the notification information including the NACK message. Then, the user equipment does not switch the receive beam, and receives the downlink synchronization signal on the unlicensed frequency band still by using the current switched beam. It can be learned that, when the base station successfully sends the synchronization signal burst on the unlicensed frequency band in the specific synchronization sending time window, the base station does not generate the notification information, and sends another synchronization signal burst in a next synchronization sending time window. Alternatively, when the base station fails to send the synchronization signal burst on the unlicensed frequency band in the specific synchronization sending time window, the base station generates the notification information including the NACK message, and continues to send the current synchronization signal burst in a next synchronization sending time window. The user equipment switches the receive beam when the user equipment does not receive the notification information on the licensed frequency band in the notification detection time window, and the user equipment does not switch the receive beam when the user equipment receives, on the licensed frequency band in the notification detection time window, the notification information including the NACK message.

### Embodiment 3

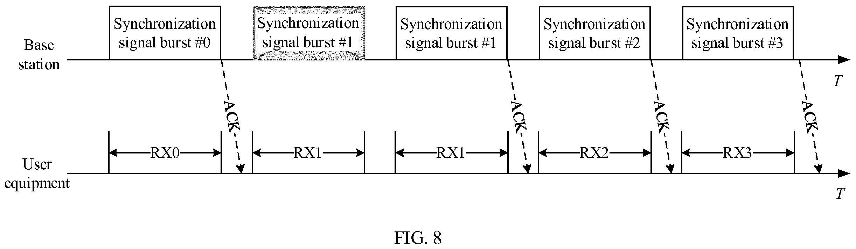

In this embodiment, the base station may send notification information in another design manner. Referring to FIG. 8, a difference between this embodiment and the embodiment shown in FIG. 7 is that the notification information indicates synchronization signal sending statuses in different manners. The following focuses on the difference between the two embodiments.

When the base station listens on the unlicensed frequency band in a specific synchronization sending time window, that the channel is idle, the base station successfully preempts the channel, and sends a synchronization signal burst, and the base station generates notification information including an ACK message, and sends the notification information to user equipment in a notification sending time window by using a licensed frequency band. When the notification information includes only the ACK message, the notification information may alternatively be understood as the ACK message. Correspondingly, the user equipment receives the synchronization signal burst on the unlicensed frequency band in a specific synchronization detection time window, and receives, in a notification detection time window, the notification information including the ACK message. Then, the user equipment switches to a next receive beam to detect a downlink synchronization signal.

When the base station listens on the unlicensed frequency band in a specific synchronization sending time window, that the channel is not idle, and the base station fails to send a downlink synchronization signal, the base station does not send the notification information, and continues to send the synchronization signal burst in a next time window. Correspondingly, the user equipment fails to receive the synchronization signal burst on the unlicensed frequency band in the synchronization detection time window, and fails to receive the notification information in the notification detection time window. Then, the user equipment does not switch the receive beam, and receives the downlink synchronization signal still by using the current receive beam.

It can be learned that, when the base station successfully sends the synchronization signal burst on the unlicensed frequency band in the specific synchronization sending time window, the base station generates the notification information including the ACK message, and sends the notification information by using the notification sending time window following the synchronization sending time window. The base station does not send the notification information when the base station fails to send the synchronization signal burst on the unlicensed frequency band in the specific synchronization sending time window. The user equipment switches the receive beam when the user equipment receives, in the notification detection time window, the notification information including the ACK message, and the user equipment does not switch the receive beam when the user equipment fails to receive the notification information in the notification detection time window.

### Embodiment 4

In this embodiment, when a quantity of synchronization signal blocks in a synchronization signal burst is less than a quantity of transmit beams of a base station, a plurality of synchronization signal bursts are needed to complete sending of synchronization signals by using all transmit beams of the base station. When the transmit beams of the base station are grouped, a quantity of transmit beams in each group may be less than or equal to a quantity M of synchronization signal blocks in one synchronization signal burst, and M is a positive integer greater than 1. Notification information further includes a beam group ID. In this way, the base station may perform sending by using transmit beam groups. Correspondingly, for user equipment, each receive beam of the user equipment needs to separately receive synchronization signal bursts sent by using the transmit beam groups of the base station.

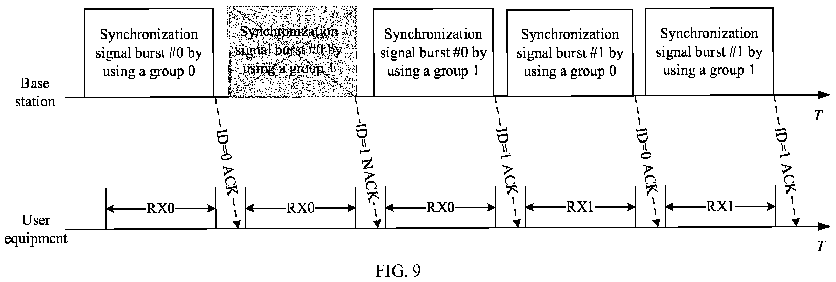

Specifically, referring to FIG. 9, an example in which transmit beams B0 to B7 are divided into two beam groups #0 and #1, and a quantity of synchronization signal bursts received by the user equipment is 2 (M=2) is used for description. The beam group #0 includes the four transmit beams B0 to B3, and is corresponding to a synchronization signal burst group 0. The beam group #1 includes the four transmit beams B4 to B7, and is corresponding to a synchronization signal burst group 1. In other words, the base station needs two synchronization signal bursts to complete traverse of the transmit beams once. Each synchronization signal burst includes four synchronization signal blocks, an ID of the synchronization signal burst group 0 is 0, and an ID of the synchronization signal burst group 1 is 1.

As shown in FIG. 9, in a first synchronization sending time window, when the base station listens on the unlicensed frequency band, that the channel is idle, the base station preempts the channel, and sends a synchronization signal burst #0 by using a group 0. The base station generates notification information including an ACK message and a corresponding beam group ID=0 of the synchronization signal burst #0, and sends the notification information on a licensed frequency band in a notification sending time window. Correspondingly, the user equipment detects a downlink synchronization signal on the unlicensed frequency band in a synchronization detection time window by using a receive beam RX0, and receives the notification information including the ID= 0 of the beam group and the ACK message on the licensed frequency band in a notification detection time window. In this case, a quantity of downlink synchronization signal bursts received by the user equipment is less than 2, and the user equipment performs receiving still by using the receive beam RX0.

Then, the base station sends a synchronization signal burst #0 by using a group 1 in a second synchronization sending time window. Specifically, when the base station listens on the unlicensed frequency band in the second synchronization sending time window, that the channel is not idle, the base station fails to preempt the channel. The synchronization signal burst #0 fails to be sent by using the group 1, and then the base station generates notification information including a NACK message and a corresponding beam group ID: 1 of the synchronization signal burst #0 sent by using the group 1, and sends the notification information to the user equipment on the licensed frequency band in the detection sending time window. Correspondingly, the user equipment fails to detect the downlink synchronization signal in the synchronization detection time window by using the receive beam RX0, and the user equipment receives, on the licensed frequency band in the notification detection time window, the notification information including the ID=1 of the beam group and the NACK message. In this case, the synchronization signal burst #0 fails to be sent by using the group 1, and a quantity of downlink synchronization signal bursts received by the user equipment is less than 2; then, the user equipment performs receiving still by using the receive beam RX0.

Then, the base station continues to send the synchronization signal burst #0 by using the group 1 in a third synchronization sending time window. When the base station listens on the unlicensed frequency band in the third synchronization sending time window, that the channel is idle, the base station preempts the channel, sends the synchronization signal burst #0 by using the group 1, and generates notification information including an ACK message and the corresponding beam group ID: 1 of the synchronization signal burst #0 sent by using the group 1, and sends the notification information on the licensed frequency band in the notification sending time window. Correspondingly, the user equipment detects the downlink synchronization signal by using the receive beam RX0, and receives, on the unlicensed frequency band in the synchronization detection time window, the synchronization signal burst #0 that is sent by using the group 1, and the user equipment receives, on the licensed frequency band in the notification detection time window, the notification information including the beam group ID: 1 and the ACK message. In this case, a quantity of downlink synchronization signal bursts received by using RX0 of the user equipment is equal to 2, and the user equipment switches to a receive beam RX1 to perform receiving.

A similar step is performed. The base station continues to send a synchronization signal burst #1 by using the group 0 and the group 1 separately, and the user equipment detects the downlink synchronization signal by using the receive beam RX1. Downlink synchronization signals are sent by using the transmit beam groups of the base station, and this is applicable to a scenario in which a base station side has a relatively large quantity of transmit beams.

### Embodiment 5

In this embodiment, notification information further includes a component carrier ID. For an application scenario in which there are a plurality of component carriers (Component Carrier, CC) on an unlicensed frequency band, the plurality of component carriers need to be used to send downlink synchronization signals. Specifically, the base station sends the downlink synchronization signals on the plurality of component carriers of the unlicensed frequency band, and user equipment detects the downlink synchronization signals on the plurality of component carriers. Based on a sending status of the downlink synchronization signal on the unlicensed frequency band, the base station sends, to the user equipment by using a licensed frequency band, the notification information that includes a status indication indicating a sending status of the downlink synchronization signal on each component carrier, and the user equipment separately detects the notification information on the component carriers.

If the synchronization signals are sent on the plurality of component carriers, a piece of notification information may be used to notify the user equipment of whether downlink synchronization signal bursts are successfully sent on the plurality of component carriers. If the synchronization signals on the plurality of component carriers are sent by using different configurations, alternatively, a plurality of pieces of notification information may be used to separately notify the user equipment of whether downlink synchronization signal bursts are successfully sent on the plurality of component carriers.

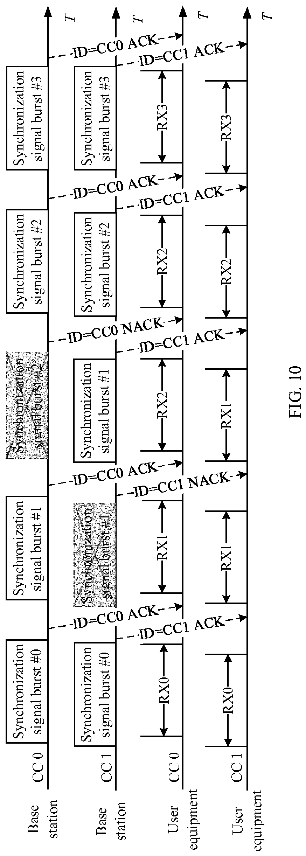

Referring to FIG. 10, the following separately uses component carriers CC 0 and CC 1 with different configurations as an example for description. After sending a downlink synchronization signal burst on each component carrier, the base station sends notification information to the user equipment by using the licensed frequency band.

The CC 0 is first used as an example. The base station sends an SSB in a first synchronization sending time window of the CC 0. When the base station listens on the unlicensed frequency band, that a channel corresponding to the CC 0 is idle, the base station preempts the channel, and sends the synchronization signal burst. The base station generates notification information including an ACK message and a component carrier ID=CC0, and sends the notification information on the licensed frequency band in a notification sending time window. Correspondingly, the user equipment detects the downlink synchronization signal on the component carrier CC 0 of the unlicensed frequency band in the synchronization detection time window by using a receive beam RX0, and receives a synchronization signal burst #0, and when receiving, on the licensed frequency band in a notification detection time window, the notification information including the component carrier ID and the ACK message, the user equipment switches the receive beam to RX1. In a second synchronization sending time window of the CC 0, the channel corresponding to the CC 0 is idle, the base station sends a synchronization signal burst #1, and the user equipment receives the synchronization signal burst #1, and switches the receive beam to RX2.

The base station sends a synchronization signal burst #2 in a third synchronization sending time window of the CC 0. When the base station listens on the unlicensed frequency band, that the channel corresponding to the CC 0 is not idle, the base station fails to send the synchronization signal burst #2. The base station generates notification information including a component carrier ID: CC0 and a NACK message, and sends the notification information on the licensed frequency band in the notification sending time window. Correspondingly, the user equipment detects the downlink synchronization signal in the synchronization detection time window by using the receive beam RX2, but fails to detect the synchronization signal burst #2, and when receiving, on the licensed frequency band in the notification detection time window, the notification information including the component carrier ID and the NACK message, the user equipment does not switch the receive beam, and detects the downlink synchronization signal in a next time window still by using the current receive beam RX2.

In fourth and fifth synchronization sending time windows, the base station sends synchronization signal bursts #2 and #3 by performing similar steps. Correspondingly, a user receives the synchronization signal bursts #2 and #3 by performing similar steps.

A CC 1 is used as an example. The base station sends a synchronization signal burst #0 in a first synchronization sending time window of the CC 1. When the base station listens on the unlicensed frequency band, that a channel corresponding to the CC 1 is idle, the base station preempts the channel, sends the synchronization signal burst #0, generates notification information including a component carrier ID=CC1 and an ACK message, and sends the notification information on the licensed frequency band in the notification sending time window. Correspondingly, the user equipment detects the downlink synchronization signal on the component carrier CC 1 of the unlicensed frequency band in the synchronization detection time window by using the receive beam RX0, and receives the synchronization signal burst #0, and when receiving, on the licensed frequency band in the notification detection time window, the notification information including the component carrier ID and the ACK message, the user equipment switches the receive beam to RX1.

The base station continues to send a synchronization signal burst #1 in a second synchronization sending time window of the CC 1. When the base station listens on the unlicensed frequency band, that the channel corresponding to the CC 1 is not idle, the base station fails to send the synchronization signal burst #1. The base station generates notification information including a component carrier ID=CC1 and a NACK message, and sends the notification information on the licensed frequency band in the notification sending time window. Correspondingly, the user equipment detects the downlink synchronization signal in the synchronization detection time window by using the receive beam RX1, but fails to detect the synchronization signal burst #1 on the unlicensed frequency band, and when receiving, on the licensed frequency band, the notification information including the component carrier ID and the NACK message, the user equipment does not switch the receive beam, and detects the downlink synchronization signal in a next time window still by using the current receive beam RX1.

In third, fourth, and fifth synchronization sending time windows, the base station sends synchronization signal bursts #1, #2, and #3 by performing similar steps. Correspondingly, a user receives the synchronization signal bursts #1, #2, and #3 by performing similar steps. It can be learned that results of listening on channels on component carriers are different because the channels corresponding to the component carriers have different statuses or different interference is caused to the channels corresponding to the component carriers.

### Embodiment 6

In this embodiment, in an application scenario of sending synchronization signals by using a plurality of radio frequency channels, a base station simultaneously sends downlink synchronization signals in different directions by using the plurality of radio frequency channels. Correspondingly, user equipment may detect the downlink synchronization signal by using one or more radio frequency channels. Notification information may further include a radio frequency channel ID number.

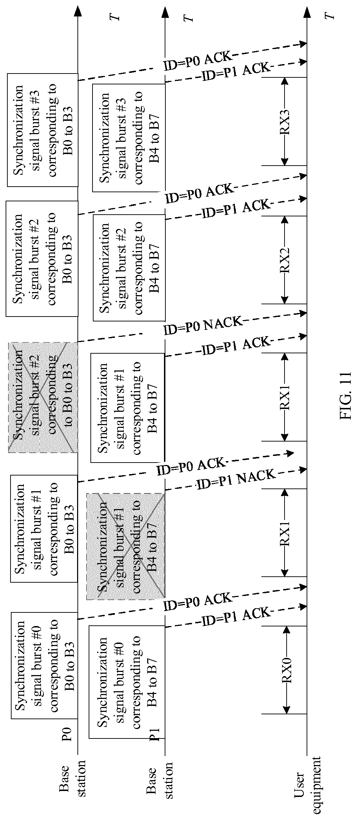

For example, FIG. 11 is a schematic diagram illustrating that a base station sends notification information by using different radio frequency channels. After sending a downlink synchronization signal burst on each radio frequency channel, the base station sends notification information to the user equipment by using a licensed frequency band. The following is described by using an example in which the base station sends the downlink synchronization signal by using a radio frequency channel P0 and a radio frequency channel PI and the user equipment performs detection by using one radio frequency channel. The radio frequency channel P0 is used to send synchronization signal blocks in a synchronization signal burst corresponding to B0 to B3, and the radio frequency channel P1 is used to send synchronization signal blocks in a synchronization signal burst corresponding to B4 to B7.

In a first time window, when the base station listens on the unlicensed frequency band, that a channel corresponding to P0 is idle, the base station preempts the channel, and sends a synchronization signal burst #0 corresponding to B0 to B3. The synchronization signal burst #0 corresponding to B0 to B3 is successfully sent on the unlicensed frequency band on the channel corresponding to P0. The base station generates notification information including a radio frequency channel ID=P0 and an ACK message, and sends the notification information by using a licensed frequency band. A synchronization signal burst #0 corresponding to B4 to B7 is successfully sent on the unlicensed frequency band on the channel corresponding to P1. The base station generates an ACK message, and sends a radio frequency channel ID=P1 and an ACK message by using the licensed frequency band. Correspondingly, the user equipment detects, on the unlicensed frequency band by using a receive beam RX0, the synchronization signal burst #0 that is corresponding to B0 to B3 and that is sent on the radio frequency channel P0 and the synchronization signal burst #0 that is corresponding to B4 to B7 and that is sent on the radio frequency channel P1, and detects, on the licensed frequency band, the notification information including the radio frequency channel ID=P0 and the ACK message of P0 and the notification information including the radio frequency channel ID=P1 and the ACK message of P1. Because a complete synchronization signal burst #0 is received by the user equipment by using the receive beam RX0 in this case, the user equipment switches the receive beam to RX1, and performs detection in a next time window by using RX1.

In a second time window, when the base station listens on the unlicensed frequency band, that a channel corresponding to P0 is idle, the base station preempts the channel, and sends a synchronization signal burst #1 corresponding to B0 to B3. The synchronization signal burst #1 corresponding to B0 to B3 is successfully sent on the unlicensed frequency band on the channel corresponding to P0. The base station generates notification information that includes a radio frequency channel ID=P0 and an ACK message, and sends the notification information by using the licensed frequency band. When the base station listens on the unlicensed frequency band, that the channel corresponding to P1 is not idle, the base station fails to preempt the channel to send the synchronization signal burst #1 corresponding to B4 to B7. The base station generates notification information that includes a radio frequency channel ID=P1 and a NACK message, and sends the notification information by using the licensed frequency band. Correspondingly, the user equipment detects, on the unlicensed frequency band by using the receive beam RX1, the synchronization signal burst #1 that is corresponding to B0 to B3 and that is sent on the radio frequency channel P0, and detects, on the licensed frequency band, the notification information including the radio frequency channel ID=P0 and the ACK message of P0, and the notification information including the radio frequency channel ID=P1 and the NACK message of P1. Because the synchronization signal burst #1 corresponding to B4 to B7 fails to be received by using the radio frequency channel P1 in this case, the user equipment does not switch the receive beam, and performs detection in a next time window still by using RX1.

In a third time window, when the base station listens on the unlicensed frequency band, that the channel corresponding to P0 is not idle, the base station fails to preempt the channel to send a synchronization signal burst #1 corresponding to B0 to B3. The base station generates notification information that includes a radio frequency channel ID=P0 and a NACK message, and sends the notification information by using the licensed frequency band. When the base station listens on the unlicensed frequency band, that the channel corresponding to P1 is idle, the base station preempts the channel, and continues to send the synchronization signal burst #1 that is corresponding to B4 to B7 and that fails to be sent in the previous time window. The base station generates notification information that includes a radio frequency channel ID=P1 and an ACK message, and sends the notification information by using the licensed frequency band. A complete synchronization signal burst #1 is successfully sent in this case. Then, the user equipment switches the receive beam to perform detection in a next time window by using RX2.

Similarly, in fourth and fifth time windows, the base station sends corresponding synchronization signal bursts #2 and #3 on the radio frequency channels P0 and P1 respectively by performing similar steps.

The foregoing describes in detail the embodiments of the sending method and the embodiments of the receiving method in this application. The following further describes the embodiments of the sending device and the embodiments of the receiving device in this application.

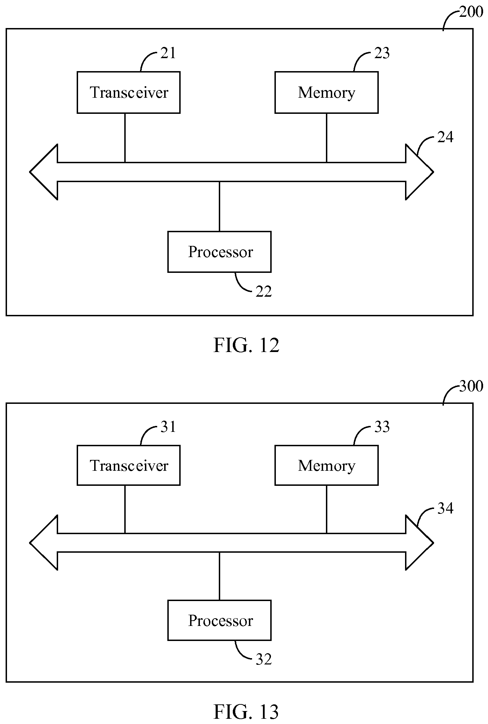

FIG. 12 is a schematic diagram of a possible structure of a sending device according to an embodiment of this application. The sending device 200 may include a transceiver 21, a processor 22, and a memory 23. The transceiver 21, the processor, and the memory are connected to each other by using a bus 24.

The memory 23 includes but is not limited to a random access memory (Random Access Memory, RAM), a read-only memory (Read-Only Memory, ROM), an erasable programmable read-only memory (Erasable Programmable Read Only Memory, EPROM), or a compact disc read-only memory (Compact Disc Read-Only Memory, CD-ROM). The memory 23 is configured to store a related instruction and data, and program code and data of the sending device.

The transceiver 21 may send data and/or a signal, and receive data and/or a signal.

The processor 22 may include one or more processors, for example, include one or more central processing units (Central Processing Unit, CPU), and when the processor 22 is the CPU, the CPU may be a single-core CPU, or may be a multi-core CPU.

The processor 22 is configured to support the sending device in performing step 101 shown in FIG. 3, and generate notification information that includes a status indication indicating a sending status of a downlink synchronization signal on an unlicensed frequency band.

The transceiver 21 is configured to support the sending device in performing step 102 shown in FIG. 3, and send the notification information by using a licensed frequency band.

For steps performed by the processor 22 and the transceiver 21, refer to detailed descriptions of the base station side in the embodiments corresponding to FIG. 4 to FIG. 11. Details are not described herein again.

It may be understood that, FIG. 12 shows only a simplified design of the sending device. In actual application, when the sending device is a base station, the sending device may further separately include other necessary components, including but not limited to any quantity of transceivers, processors, controllers, memories, communications units, and the like. All sending devices that can implement this application fall within the protection scope of this application.

FIG. 13 is a schematic diagram of a possible structure of a receiving device according to an embodiment of this application. The receiving device 300 may include a transceiver 31, a processor 32, and a memory 33. The transceiver 31, the processor, and the memory are connected to each other by using a bus 34.

The memory 33 includes but is not limited to a random access memory (Random Access Memory, RAM), a read-only memory (Read-Only Memory, ROM), an erasable programmable read-only memory (Erasable Programmable Read Only Memory, EPROM), or a portable read-only memory (Compact Disc Read-Only Memory, CD-ROM). The memory 33 is configured to store a related instruction and data, and program code and data of the receiving device.

The transceiver 31 may send data and/or a signal, and receive data and/or a signal.

The processor 32 may include one or more processors, for example, include one or more central processing units (Central Processing Unit, CPU), and when the processor 32 is the CPU, the CPU may be a single-core CPU, or may be a multi-core CPU.

The transceiver 31 is configured to support the receiving device in performing step 103 shown in

FIG. 3, and detect and receive notification information on a licensed frequency band, where the notification information includes a status indication indicating a sending status of a downlink synchronization signal from a base station on an unlicensed frequency band, and the sending status indicates whether the downlink synchronization signal is successfully sent or fails to be sent.

The processor 32 is configured to support the receiving device in performing step 104 shown in FIG. 3, and is configured to determine, based on the notification information, whether to switch a current receive beam.

For steps performed by the processor 31 and the transceiver 32, refer to detailed descriptions of the user equipment side in the embodiments corresponding to FIG. 4 to FIG. 11. Details are not described herein again.

It may be understood that, FIG. 13 shows only a simplified design of the receiving device. In actual application, when the receiving device is user equipment, the receiving device may further separately include other necessary components, including but not limited to any quantity of transceivers, processors, controllers, memories, communications units, and the like. All receiving devices that can implement this application fall within the protection scope of this application. All or some of the foregoing embodiments may be implemented by means of software, hardware, firmware, or any combination thereof. When software is used to implement the embodiments, all or some of the embodiments may be implemented in a form of a computer program product. The computer program product includes one or more computer instructions. When the computer program instructions are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center integrating one or more usable media. The usable medium may be a magnetic medium (for example, a floppy disk, a hard disk, or a magnetic tape), an optical medium (for example, a DVD), a semiconductor medium (for example, a solid state disk Solid State Disk, (SSD)), or the like. This application is described with reference to the flowcharts and/or block diagrams of the method, the device (system), and the computer program product according to the embodiments of this application. It should be understood that computer program instructions may be used to implement each procedure and/or each block in the flowcharts and/or the block diagrams, and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of the another programmable data processing device generate an apparatus for implementing a specified function in one or more processes in the flowcharts and/or in one or more blocks in the block diagrams. These computer program instructions may alternatively be stored in a computer readable memory that can instruct the computer or another programmable data processing device to work in a specific manner, so that the instructions stored in the computer readable memory generate an artifact that includes an instruction apparatus. The instruction apparatus implements a specified function in one or more procedures in the flowcharts and/or in one or more blocks in the block diagrams.

These computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specified function in one or more procedures in the flowcharts and/or in one or more blocks in the block diagrams.

The computer program product includes the foregoing computer program instruction, and when the computer program product runs on a computer, the computer performs the downlink synchronization signal sending method or the downlink synchronization signal receiving method. Although preferred embodiments of this application have been described, a person skilled in the art can make additional changes and modifications to these embodiments once they learn of the basic inventive concept. Therefore, the following claims are intended to be construed as to cover the preferred embodiments and all changes and modifications falling within the scope of this application.

Apparently, a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A downlink synchronization signal sending method, comprising:
generating, by a base station, notification information comprising a status indication indicating a sending status of a downlink synchronization signal on an unlicensed frequency band, wherein the sending status indicates whether the downlink synchronization signal is successfully sent or fails to be sent; and
sending, by the base station, the notification information by using a licensed frequency band.

2. The method according to claim 1, wherein the generating, by a base station, notification information comprising a status indication indicating a sending status of a downlink synchronization signal on an unlicensed frequency band comprises:
when the base station sends the downlink synchronization signal on the unlicensed frequency band, generating notification information comprising an ACK message.

3. The method according to claim 1 or 2, wherein the generating, by a base station, notification information comprising a status indication indicating a sending status of a downlink synchronization signal on an unlicensed frequency band comprises:
when the base station fails to send the downlink synchronization signal on the unlicensed frequency band, generating notification information comprising a NACK message.

4. The method according to any one of claims 1 to 3, wherein the base station comprises a plurality of transmit beams, the plurality of transmit beams are divided into a plurality of beam groups, and downlink synchronization signals are a plurality of synchronization signal bursts, each beam group has a beam group ID and is corresponding to one synchronization signal burst, and the notification information further comprises the beam group ID.

5. The method according to any one of claims 1 to 4, wherein the unlicensed frequency band comprises a plurality of component carriers, each component carrier has a component carrier ID, and the notification information further comprises the component carrier ID.

6. The method according to any one of claims 1 to 4, wherein the downlink synchronization signals are sent on the unlicensed frequency band by using a plurality of radio frequency channels, each radio frequency channel has a radio frequency channel ID, and the notification information further comprises the radio frequency channel ID.

7. A downlink synchronization signal receiving method, wherein the method is applied to user equipment having a plurality of receive beams and comprises:
detecting and receiving, by the user equipment, notification information on a licensed frequency band, wherein the notification information comprises a status indication indicating a sending status of a downlink synchronization signal from a base station on an unlicensed frequency band, and the sending status indicates whether the downlink synchronization signal is successfully sent or fails to be sent; and
determining, by the user equipment based on the notification information, whether to switch a current receive beam to receive the downlink synchronization signal on the unlicensed frequency band.

8. The method according to claim 7, wherein the determining, by the user equipment based on the notification information, whether to switch a current receive beam to receive the downlink synchronization signal on the unlicensed frequency band comprises:
when the notification information comprises an ACK message, switching, by the user equipment, the current receive beam to receive the downlink synchronization signal on the unlicensed frequency band.

9. The method according to claim 7 or 8, wherein the determining, by the user equipment based on the notification information, whether to switch a current receive beam to receive the downlink synchronization signal on the unlicensed frequency band comprises:
when the notification information comprises a NACK message, receiving, by the user equipment, the downlink synchronization signal on the unlicensed frequency band still by using the current receive beam.

10. A sending device, comprising:
a processor, configured to generate notification information comprising a status indication indicating a sending status of a downlink synchronization signal on an unlicensed frequency band, wherein the sending status indicates whether the downlink synchronization signal is successfully sent or fails to be sent; and
a transmitter, configured to send the notification information by using a licensed frequency band.

11. The sending device according to claim 10, wherein the processor is configured to: when the sending device preempts a channel, and sends a downlink synchronization signal on the unlicensed frequency band, generate notification information comprising an ACK message.

12. The sending device according to claim 10 or 11, wherein the processor is configured to: when the sending device fails to preempt a channel to send a downlink synchronization signal on the unlicensed frequency band, generate notification information comprising a NACK message.

13. The sending device according to any one of claims 10 to 12, wherein the sending device has a plurality of transmit beams, the plurality of transmit beams are divided into a plurality of beam groups, and downlink synchronization signals are a plurality of synchronization signal bursts, each beam group has a beam group ID and is corresponding to one synchronization signal burst, and the notification information further comprises the beam group ID.

14. The sending device according to any one of claims 10 to 13, wherein the unlicensed frequency band comprises a plurality of component carriers, each component carrier has a component carrier ID, and the notification information further comprises the component carrier ID.

15. The sending device according to any one of claims 10 to 13, wherein the downlink synchronization signals are sent on the unlicensed frequency band by using a plurality of radio frequency channels, each radio frequency channel has a radio frequency channel ID, and the notification information further comprises the radio frequency channel ID.

16. A receiving device, wherein the receiving device has a plurality of receive beams and comprises:
a receiver, configured to detect and receive notification information on a licensed frequency band, wherein the notification information comprises a status indication indicating a sending status of a downlink synchronization signal from a base station on an unlicensed frequency band, and the sending status indicates whether the downlink synchronization signal is successfully sent or fails to be sent; and
a processor, configured to determine, based on the notification information, whether to switch a current receive beam to receive the downlink synchronization signal on the unlicensed frequency band.

17. The receiving device according to claim 16, wherein one or more processors are configured to: when the notification information comprises an ACK message, switch the current receive beam to receive the downlink synchronization signal on the unlicensed frequency band.

18. The receiving device according to claim 16 or 17, wherein the one or more processors are configured to: when the notification information comprises a NACK message, receive the downlink synchronization signal on the unlicensed frequency band still by using the current receive beam.

19. A sending device, wherein the sending device is applied to a base station, the sending device comprises one or more processors and a memory, the memory is coupled to the one or more processors, and the one or more processors are configured to perform the method according to any one of claims 1 to 6.

20. A sending device, wherein the sending device is applied to a base station, the sending device comprises one or more processors, and the one or more processors are coupled to a memory, and are configured to read an instruction in the memory and perform, according to the instruction, the method according to any one of claims 1 to 6.

21. A computer-readable storage medium, comprising an instruction, wherein when the instruction runs on a computer, the computer performs the method according to any one of claims 1 to 6.

22. A computer program product comprising an instruction, wherein when the product runs on a computer, the computer performs the method according to any one of claims 1 to 6.

23. A receiving device, wherein the receiving device is applied to user equipment, the receiving device comprises one or more processors and a memory, the memory is coupled to the one or more processors, and the one or more processors are configured to perform the method according to any one of claims 7 to 9.

24. A receiving device, wherein the receiving device is applied to user equipment, the receiving device comprises one or more processors, and the one or more processors are coupled to a memory, and are configured to read an instruction in the memory and perform, according to the instruction, the method according to any one of claims 7 to 9.

25. A computer-readable storage medium, comprising an instruction, wherein when the instruction runs on a computer, the computer performs the method according to any one of claims 7 to 9.

26. A computer program product comprising an instruction, wherein when the product runs on a computer, the computer performs the method according to any one of claims 7 to 9.
